# EUROPÄISCHE PATENTSCHRIFT

(11) **EP 2 462 017 B1**
(45) Veröffentlichungstag und Bekanntmachung des Hinweises auf die Patenterteilung: **16.10.2013**
(21) Anmeldenummer: 10742467.3
(22) Anmeldetag: 03.08.2010
(51) Int. Cl.: B62D 15/02, B60W 30/06

(54) **VERFAHREN ZUM UNTERSTÜTZTEN EINPARKEN IN EINE PARKLÜCKE UND VORRICHTUNG HIERZU**
METHOD FOR ASSISTED PARKING IN A PARKING GAP AND DEVICE TO THIS END
PROCÉDÉ POUR LE STATIONNEMENT ASSISTÉ DANS UN CRÉNEAU DE STATIONNEMENT ET DISPOSITIF PRÉVU À CET EFFET

(30) Priorität: 05.08.2009 DE 102009028251
(43) Veröffentlichungstag der Anmeldung: 13.06.2012
(73) Patentinhaber: Robert Bosch GmbH, 70442 Stuttgart (DE)
(72) Erfinder: SCHOENHERR, Michael, 70190 Stuttgart (DE); ALIKADIC, Mirza, 72147 Nehren (DE); SCHNEIDER, Marcus, 71642 Ludwigsburg (DE); HOFFMANN, Christian, 71229 Leonberg (DE)
(86) Internationale Anmeldenummer: PCT/EP2010/061316
(87) Internationale Veröffentlichungsnummer: WO 2011/015592

(56) Entgegenhaltungen:
- DE-A1-102006 052 575
- "UNIVERSELLE BAHNPLANUNG FUER DAS AUTOMATISCHE EINPARKEN", ATZ AUTOMOBILTECHNISCHE ZEITSCHRIFT, VIEWEG PUBLISHING, WIESBADEN, DE, Bd. 109, Nr. 1, 1. Januar 2007 (2007-01-01), Seiten 66-71, XP001540634, ISSN: 0001-2785

## Beschreibung

Die vorliegende Erfindung richtet sich auf ein Verfahren zum unterstützten Einparken eines Fahrzeugs in eine Parklücke mit einer Parkassistenzvorrichtung, die das Fahrzeug entlang wenigstens einer Einparktrajektorie führt.

Das sogenannte halbautomatische Einparken mittels einer Parkassistenzvorrichtung ermöglicht die Führung eines Fahrzeugs in eine Parklücke, wobei durch die Parkassistenzvorrichtung entweder eine Lenkbewegung an den Fahrer vorgegeben werden kann oder die Parkassistenzvorrichtung bewirkt ein aktives Lenken des Fahrzeugs, und der Fahrer muss lediglich das Gas- und Bremspedal bedienen. Die Parklücke, in die das Fahrzeug eingeparkt werden soll, kann eine Parallelparklücke sein, so dass das Fahrzeug in der Parkendposition parallel zur Fahrbahn ausgerichtet ist, auf der das Fahrzeug an die Parklücke heranfährt. Ist die Parklücke als Diagonalparklücke ausgeführt, so wird das Fahrzeug in der Parkendposition diagonal zur Fahrbahn eingeparkt, so dass das Fahrzeug beispielsweise etwa einen Winkel von 45° zur Fahrbahn einschließt. Abhängig von der Ausbildung der Parklücke als Parallelparklücke oder als Diagonalparklücke sind die Objekte, die die Parklücke begrenzen, zumeist auch parallel bzw. diagonal zur Fahrbahn ausgerichtet. Die Objekte betreffen in der Regel weitere Fahrzeuge, so dass das Fahrzeug selbst parallel versetzt oder in Reihe hintereinander zwischen die bereits geparkten Fahrzeuge eingeparkt werden muss.

Die Parkassistenzvorrichtung vermisst über seitlich am Fahrzeug vorhandene Erfassungsmittel, beispielsweise über Ultraschallsensoren, während einer langsamen Vorwärtsfahrt die Objekte, die die Parklücke begrenzen. Anhand des ermittelten Signalverlaufs, der von den Erfassungsmitteln an die Parkassistenzvorrichtung weitergegeben wird, wird erkannt, ob und wo relativ zum Fahrzeug eine geeignete Parklücke vorhanden ist. Wird in eine Parklücke eingeparkt, die durch die Erfassungsmittel erkannt wurde, kann dies über einen Rückwärtszug erfolgen, und die Parkassistenzvorrichtung übernimmt den Lenkvorgang, während dann der Fahrer nur noch die Bremse und das Gaspedal zu betätigen hat. Der Eingriff in das Lenksystem des Fahrzeugs durch die Parkassistenzvorrichtung erfolgt dabei so, dass das einzuparkende Fahrzeug sowohl an den die Parklücke begrenzenden Objekten vorbeigelenkt wird, als auch dass das Fahrzeug am Ende des Einparkvorgangs in einer Parallelparklücke parallel zur Fahrbahnbegrenzung, in der Regel der Bordstein, steht. In einer weiteren möglichen Variante muss der Fahrer immer noch selbst lenken, jedoch teilt das Parkassistenzsystem dem Fahrer mit, welchen Lenkvorgang der Fahrer auszuführen hat. In jedem Fall gibt jedoch die Parkassistenzvorrichtung eine Lenkbewegung vor, die entweder halbautomatisch ausgeführt oder durch den Fahrer übernommen wird.

Gemäß einer weiteren Entwicklungsstufe von Parkassistenzvorrichtungen kann in Querparklücken eingeparkt werden, so dass das Fahrzeug am Ende des Parkvorgangs senkrecht zum Bordstein der Fahrbahn ausgerichtet ist. Auch bei diesen Systemen kann die Parklückenposition durch seitlich am Fahrzeug vorhandene Erfassungsmittel, wie etwa Ultraschallsensoren, ermittelt werden. Die Entscheidung, ob eine Parklücke parallel oder quer zur Fahrbahn ausgerichtet ist, kann z. B. durch Vorgabe des Fahrers erfolgen, in dem dieser einen Auswahltaster betätigt, um an die Parkassistenzvorrichtung die Information zu geben, ob das Fahrzeug quer oder parallel zur Fahrbahn eingeparkt werden soll.

Bei einer Fehlbedienung, wenn z. B. der Fahrer bei einer real vorliegenden Querparksituation mit mehreren nebeneinander liegenden freien Parkplätzen versehentlich einen Parallelparkvorgang einleitet, so wird das Ergebnis lediglich eine unerwünschte Parkausrichtung des Fahrzeugs zur Folge haben, jedoch ist keine Kollision mit den die Parklücke begrenzenden Objekten zu erwarten.

Hingegen ergibt sich dieses Problem, wenn die Auswahl zwischen einer Parallelparklücke und einer Diagonalparklücke zu treffen ist. Diagonalparklücken lassen sich nur sehr bedingt anhand der Erfassungsmittel bei Vorbeifahrt des Fahrzeugs an den Diagonalparklücken von Querparklücken unterscheiden, weswegen der Fahrer in den Entscheidungsprozess integriert ist. Unterläuft dem Fahrer bei der Auswahl des Parklückentyps ein Fehler, und wählt fälschlicherweise eine Parallelparklücke anstelle einer Diagonalparklücke, so wird es mit hoher Wahrscheinlichkeit zu einer Kollision des Fahrzeugs mit einem die Parklücke begrenzenden Objekt, in der Regel ein weiteres Fahrzeug, kommen.

Aus der DE 10 2007 027 438 A1 ist ein Verfahren zum unterstützten Einparken eines Fahrzeugs in eine Parklücke mit einer Parkassistenzvorrichtung bereits bekannt. Dabei werden Erfassungsmittel genutzt, die Abstände zu den die Parklücke begrenzenden Objekten in Form von Datensätzen an die Parkassistenzvorrichtung übermittelt. Auf Basis dieser Datensätze kann eine Lenkbewegung eingeleitet bzw. angegeben werden. Im Ergebnis kann damit ein Fahrzeug exakt in eine Querparklücke eingeparkt werden.

Die DE 10 2006 052 575 A1 beschreibt ein weiteres Verfahren zum unterstützten Einparken eines Fahrzeugs in eine Querparklücke mit einer Parkassistenzvorrichtung, wobei mit möglichst wenigen Bedienhandlungen durch den Fahrer der Parkvorgang automatisch unterstützt werden kann, auch wenn die Parklücke beispielsweise hinsichtlich der Tiefe, gemessen zur Fahrtrichtung einer Fahrbahn, nicht ausreichend ermittelbar ist. Dabei kann ein automatischer Einparkmodus auch ohne eine Fahrereingabe zur Betätigung eines Einparkvorgangs direkt aktiviert werden, sofern die erfassten Hindernisse und/oder Freiflächen mittels eines Erfassungsmittels in einer Parklücke zuverlässig ermittelt worden sind. Ein Kriterium, welches herangezogen werden kann, um zu ermitteln, ob ein paralleles Einparken oder ein Quereinparken seitens des Fahrers erwünscht ist, stellt ein Winkel zwischen einer Längsrichtung des Fahrzeugs und einer Vorderseite der Parklücke dar. Stoppt der Fahrer das Fahrzeug in einem Winkel der Längsachse bezogen auf die Vorderseite der Parklücke, der einen sogenannten Auslösewinkel übertrifft, so ist davon auszugehen, dass der Fahrer ein Quereinparken beabsichtigt. Ferner wird vorgeschlagen, dass die Fahrereingabe zur Bestätigung nur vorgesehen ist, sofern ein Winkel zwischen der Längsrichtung des Fahrzeugs und einer Vorderseite der Parklücke einen vorgegebenen Auslösewinkel überschreitet.

Durch die bekannten Verfahren kann jedoch nicht die Gefahr überwunden werden, dass durch eine Fehleingabe durch den Fahrer an die Parkassistenzvorrichtung bei der Auswahl zwischen einer Parallelparklücke und einer Diagonalparklücke eine Kollision mit den die Parklücke begrenzenden Objekten vorkommen kann.

Es ist daher die Aufgabe der vorliegenden Erfindung, ein Verfahren zum unterstützten Einparken eines Fahrzeugs in eine Parklücke mit einer Parkassistenzvorrichtung vorzuschlagen, das die Nachteile des voranstehend genannten Standes der Technik überwindet und ein kollisionsfreies Einparken in eine Parklücke ermöglicht, die als Parallelparklücke oder als Diagonalparklücke ausgebildet sein kann.

Diese Aufgabe wird ausgehend von einem Verfahren zum unterstützten Einparken eines Fahrzeugs in eine Parklücke gemäß Anspruch 1 sowie einer Parkassistenzvorrichtung gemäß Anspruch 6 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass das Verfahren wenigstens die Schritte des Führens des Fahrzeugs entlang eines ersten Abschnittes der Einparktrajektorie bis zu einem Zwischenpunkt, wobei der Zwischenpunkt derart bestimmt wird, dass ein nachfolgendes Einparken des Fahrzeugs in die Parklücke ermöglicht ist, die als Parallelparklücke oder als Diagonalparklücke ausgeführt ist, des Erkennens der Parklücke als Parallelparklücke oder als Diagonalparklücke und des Führens des Fahrzeugs entlang eines auf den ersten Abschnitt folgenden zweiten Abschnittes der Einparktrajektorie, der so gewählt wird, dass das Fahrzeug in Abhängigkeit des Vorliegens einer Parallelparklücke oder eine Diagonalparklücke geführt wird, umfasst.

Kern der Erfindung ist dabei eine Zweiteilung der Einparktrajektorie in einen ersten Abschnitt und in einen zweiten Abschnitt. Der erste Abschnitt der Einparktrajektorie bis zum Zwischenpunkt wird dabei derart bestimmt, dass sowohl ein Weiterführen des Einparkvorgangs in eine diagonal zur Fahrbahn ausgerichtete Parklücke oder in eine parallel zur Fahrbahn ausgerichtete Parklücke möglich ist. Ist der Zwischenpunkt erreicht, erfolgt ein Erkennen der Parklücke als Parallelparklücke oder als Diagonalparklücke. Wird eine Parallelparklücke erkannt, so wird das Fahrzeug entlang des zweiten Abschnittes der Einparktrajektorie so geführt, dass das Fahrzeug parallel zur Fahrbahn eingeparkt wird. Wird eine Diagonalparklücke erkannt, so wird der zweite Abschnitt so ausgewählt, dass das Fahrzeug in einer diagonal zur Fahrbahn ausgerichteten Parkpositioh eingeparkt wird. Der zweite Abschnitt der Einparktrajektorie wird dabei insbesondere davon abhängig gemacht, welche Ausrichtung die Objekte aufweisen, die die Parklücke begrenzen. Die Erkennung der Parklücke als Parallelparklücke oder als Diagonalparklücke erfolgt dabei vorzugsweise basierend auf der Erkennung der die Parklücke begrenzenden Objekte. Das beschriebene Verfahren folgt grundsätzlich auf einer vorangegangenen Erkennung der Parklücke durch die Parkassistenzvorrichtung, und das Einparken des Fahrzeugs erfolgt vorzugsweise mit einem Rückwärtszug entlang der zweiteiligen Einparktrajektorie, kann jedoch auch mit einem Vorwärtszug erfolgen.

Zur Erkennung der Parklücke als Parallelparklücke oder als Diagonalparklücke ist ein Erfassungsmittel vorgesehen, welches im Schritt der Erkennung der Parklücke die Information der Art der Parklücke an die Parkassistenzvorrichtung übermittelt. Die Erfassungsmittel können als Ultraschallsensoren oder als Radarsensoren am Fahrzeug angebracht sein, durch die die Parklücke erkennbar und vermessbar ist. Die Erfassungsmittel können dabei sowohl zur grundsätzlichen Erkennung der Parklücke Verwendung finden, beispielsweise wenn das Fahrzeug an der Parklücke langsam vorbeigeführt wird, wobei die Parklücke am Vorhandensein der die Parklücke begrenzenden Objekte durch das Erfassungsmittel erkannt wird. Ferner kann das Erfassungsmittel dazu dienen, nach Erreichen des Zwischenpunktes zu erkennen, nach welcher Art die Parklücke ausgeführt ist.

Die Parklücke kann durch Objekte begrenzt sein, die vorzugsweise weitere parkende Fahrzeuge sind. Die Erkennung der Parklücke als Parallelparklücke oder als Diagonalparklücke wird durch eine Detektion wenigstens eines der Objekte mit dem Erfassungsmittel ausgeführt.

Die die Parklücke begrenzenden Objekte können Fahrzeuge sein, die diagonal zur Fahrbahn parken, wenn die Parklücke eine Diagonalparklücke ist, wobei die Fahrzeuge parallel hintereinander zur Fahrbahn parken, wenn die Parklücke eine Parallelparklücke ist. Parallelparklücke bedeutet folglich, dass die Fahrzeuge parallel zur Fahrbahn parken, wobei eine Diagonalparklücke durch Fahrzeuge vorgegeben ist, die unter einem Winkel, vorzugsweise 45°, zur Fahrbahn parken. Das Erfassungsmittel kann einen Abstand zwischen dem Fahrzeug und wenigstens einem der Objekte bestimmen, wobei vorzugsweise zwei Erfassungsmittel in Form von Ultraschallsensoren an jeder Seite des Fahrzeugs vorhanden sind. Der erste Abschnitt der Einparktrajektorie wird bis zum Zwischenpunkt derart bestimmt, dass das Fahrzeug eine Ausrichtung aufweist, in der das Fahrzeug etwa parallel zu einem Fahrzeug angeordnet ist, wenn dieses Fahrzeug diagonal zur Fahrbahn ausgerichtet ist, auf der sich das Fahrzeug der Parklücke nähert. Folglich wird das Fahrzeug diagonal zur Fahrbahnbegrenzung ein Stück weit in die Parklücke eingelenkt, bis der Zwischenpunkt erreicht wird. Ist die Parklücke eine Parallelparklücke, so steht das Fahrzeug unter einem Diagonalwinkel zu den Fahrzeugen, die die Parallelparklücke vorderseitig und hinterseitig begrenzen.

Durch das Erfassungsmittel wird über dem zweiten Abschnitt der Einparktrajektorie dann ein im Wesentlichen gleichbleibender Abstand detektiert, wenn die Parklücke eine Diagonalparklücke ist, so dass der zweite Abschnitt im Wesentlichen als Geraderückwärtsfahrt ausgeführt wird. Ist der erste Abschnitt der Einparktrajektorie ein Bogenabschnitt, so steht das Fahrzeug bei einer Diagonalparklücke parallel zum benachbarten Fahrzeug. Wird nunmehr der zweite Teil der Einparktrajektorie ausgeführt, fährt das Fahrzeug lediglich mit einem Rückwärtseinparkzug parallel zum benachbarten Fahrzeug. Folglich ändert sich der durch das Erfassungsmittel erfasste Abstand zwischen dem Fahrzeug und dem benachbarten Fahrzeug nicht mehr.

Wird durch das Erfassungsmittel über dem zweiten Abschnitt der Einparktrajektorie ein größer werdender Abstand detektiert, wenn die Parklücke als Parallelparklücke ausgeführt ist, so wird der zweite Abschnitt im Wesentlichen als Bahnkurve ausgeführt. Diese Bahnkurve weist eine gegenüberliegende Krümmung relativ zur Bahnkurve auf, die den ersten Abschnitt der Einparktrajektorie betrifft. Die Messung des Abstandes kann dabei sowohl vor Erreichen des Zwischenpunktes als auch nach Erreichen des Zwischenpunktes erfolgen. Da die die Parklücke begrenzenden Fahrzeuge auf bekannte Weise grundsätzlich einen rechteckigen Grundquerschnitt aufweisen, wird der Abstand zwischen dem einparkenden Fahrzeug und dem benachbarten Fahrzeug dann minimal sein, wenn das Erfassungsmittel eine Ecke des Fahrzeugs erfasst, wobei sich der Abstand wieder vergrößert, wenn das Erfassungsmittel an der Ecke des Fahrzeugs vorbeigeführt wird. Damit kann eine Parallelparklücke erkannt werden. Steht das benachbarte Fahrzeug diagonal zur Fahrbahn, bleibt der Abstand zwischen dem bewegten Fahrzeug und dem die Parklücke begrenzenden Fahrzeug über dem gesamten zweiten Abschnitt der Einparktrajektorie im Wesentlichen konstant.

Die vorliegende Erfindung richtet sich ferner auf eine Parkassistenzvorrichtung zum unterstützten Einparken eines Fahrzeugs in eine Parklücke entlang wenigstens einer Einparktrajektorie, wobei die Einparktrajektorie in einen ersten Abschnitt und einen zweiten Abschnitt aufgeteilt ist und wobei zwischen den Abschnitten ein Zwischenpunkt vorgesehen und eine Ausrichtung des Fahrzeugs im Zwischenpunkt derart bestimmt ist, dass ein nachfolgendes Einparken in eine als Parallelparklücke oder als Diagonalparklücke ausgeführte Parklücke ermöglicht ist, wobei eine Erkennung der Parklücke ermöglicht ist, derart, dass eine Erkennung der Parklücke als Parallelparklücke oder als Diagonalparklücke erfolgt. Ferner ist ein Erfassungsmittel vorgesehen, mittels dessen die Erkennung als Parallelparklücke oder als Diagonalparklücke erfolgt.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1a: eine Einparksituation eines Fahrzeugs in eine Parklücke, die als Diagonalparklücke ausgeführt ist,
- Fig. 1b: eine Einparksituation eines Fahrzeugs in eine Parklücke, die als Parallelparklücke ausgeführt ist,
- Fig. 2a: ein Ausführungsbeispiel einer Einparktrajektorie zum Einparken eines Fahrzeugs in eine Diagonalparklücke, wobei das Fahrzeug sowohl im Ausgangspunkt als auch in einem Zwischenpunkt dargestellt ist und nach dem Zwischenpunkt ein zweiter Abschnitt der Einparktrajektorie in die Diagonalparklücke folgt,
- Fig. 2b: ein Ausführungsbeispiel einer Einparktrajektorie zum Einparken eines Fahrzeugs in eine Parallelparklücke, wobei das Fahrzeug sowohl im Ausgangspunkt als auch in einem Zwischenpunkt dargestellt ist und nach dem Zwischenpunkt ein zweiter Abschnitt der Einparktrajektorie in die Parallelparklücke folgt,
- Fig. 3a: ein Diagramm eines Abstandes d zwischen dem einparkenden Fahrzeug und einem benachbarten Fahrzeug über dem Einparkweg s, wie dieser sich ergibt, wenn die Parklücke als Parallelparklücke ausgeführt ist,
- Fig. 3b: ein Diagramm eines Abstandes d zwischen dem einparkenden Fahrzeug und einem benachbarten Fahrzeug über dem Einparkweg s, wie dieser sich ergibt, wenn die Parklücke als Diagonalparklücke ausgeführt ist.

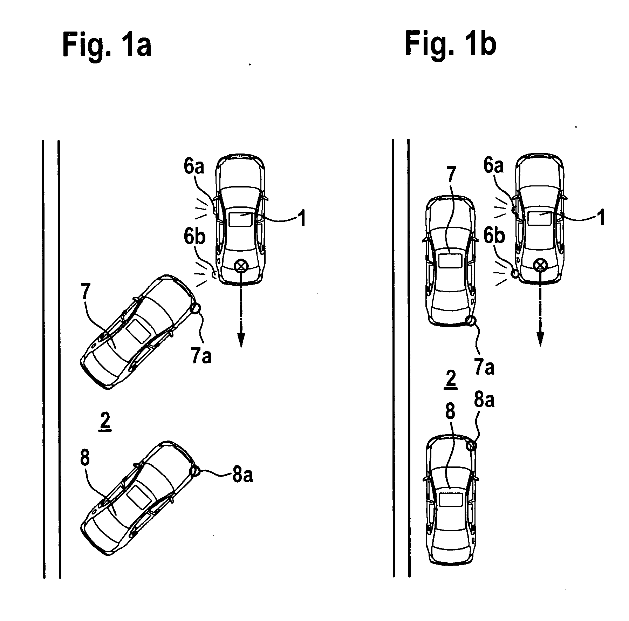

Die Figuren 1 a und 1 b zeigen ein Ausführungsbeispiel einer Einparksituation eines Fahrzeugs 1 in eine Parklücke 2. Die Parklücke 2 ist durch ein erstes Objekt 7 in Form eines ersten Fahrzeugs 7 und durch ein zweites Objekt 8 in Form eines zweiten Fahrzeugs 8 begrenzt. Die Fahrzeuge 7 und 8 stehen diagonal zur Fahrbahn, so dass die Parklücke 2 eine Diagonalparklücke ist (Figur 1a). Die Fahrzeuge 7 und 8 können auch parallel zur Fahrbahn stehen, so dass die Parklücke 2 eine Parallelparklücke ist (Figur 1 b). Das Fahrzeug 1 wird langsam an der Parklücke 2 in der gezeigten Pfeilrichtung vorbeibewegt. Am Fahrzeug 1 sind Erfassungsmittel 6a und 6b vorhanden, die als Ultraschallsensoren ausgeführt sind und die Parklücke 2 detektieren. Zur Detektion der Parklücke 2 wird das Fahrzeug 1 langsam an den Fahrzeugen 7 und 8 vorbeibewegt, so dass durch die Erfassungsmittel 6a und 6b am ersten Fahrzeug 7 ein erster Markierungspunkt 7a und am Fahrzeug 8 ein zweiter Markierungspunkt 8a erkannt wird. Das relativ ungenaue Profil, das durch die Erfassungsmittel 6a und 6b erfasst wird und zur Erkennung einer Parklücke 2 dient, ermöglicht nicht die Bestimmung der Parklücke als Diagonalparklücke oder als Parallelparklücke. Daher wird dem Fahrer lediglich die Information bereitgestellt, dass eine Parklücke vorhanden ist, und das Fahrzeug kann entgegen der gezeigten Pfeilrichtung wieder in die Ausgangsposition zurückbewegt werden.

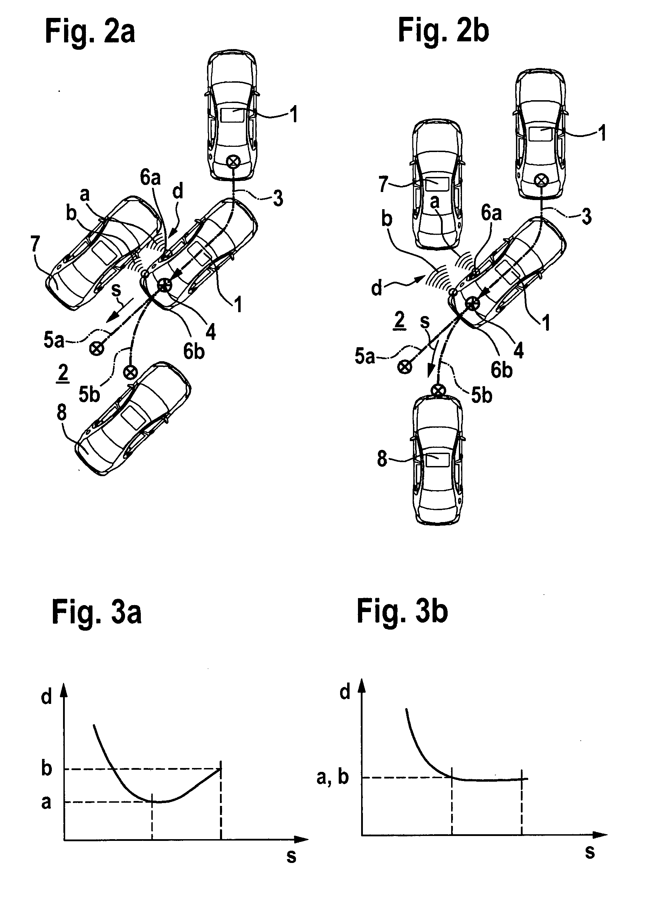

Die Figuren 2a und 2b zeigen das Fahrzeug 1 sowohl in der Ausgangssituation gemäß Figur 1a und 1 b als auch in der Position in einem Zwischenpunkt 4 nach Durchfahren eines ersten Abschnittes 3 der Einparktrajektorie. Die Einparktrajektorie beschreibt eine Bahnkurve, die sowohl zum Einparken des Fahrzeugs 1 in eine Diagonalparklücke gemäß Figur 2b als auch in eine Parallelparklücke gemäß der Figur 2a geeignet ist. Während das Fahrzeug 1 bis zum Zwischenpunkt 4 entlang des ersten Abschnittes 3 der Einparktrajektorie bewegt wird, wird durch die Erfassungsmittel 6a und 6b ein Abstand d bestimmt, welcher gemäß dem vorliegenden Ausführungsbeispiel zwischen dem einparkenden Fahrzeug 1 und dem Fahrzeug 7 gemessen wird.

In Figur 2b ist die Parklücke 2 als Diagonalparklücke ausgebildet, so dass die Fahrzeuge 7 und 8 diagonal zur Fahrbahn ausgerichtet sind, auf der sich das Fahrzeug 1 der Parklücke 2 nähert. Das Fahrzeug 1 ist sowohl in der Ausgangsposition als auch in dem Zwischenpunkt 4 gezeigt, wobei wiederum mit den Erfassungsmitteln 6a und 6b sowohl eine erste Abstandsposition a als auch eine zweite Abstandsposition b zum Fahrzeug 7 gemessen wird. Die Erfassungsmittel 6a und 6b können optional an verschieden Positionen seitlich am Fahrzeug 1 angeordnet sein. Die Abstände d zwischen den Erfassungsmitteln 6a und 6b und der ersten Abstandsposition a und der zweiten Abstandsposition b sind gleich groß ausgebildet, so dass die Parklücke 2 durch die Erfassungsmittel 6a und 6b als Diagonalparklücke erkannt wird. Folglich bestimmt die Parkassistenzvorrichtung den zweiten Abschnitt 5a der Einparktrajektorie als gerade Rückwärtsfahrt. Entlang des zweiten Abschnittes 5b wird das Fahrzeug 1 parallel zum parkenden Fahrzeug 7 und zum parkenden Fahrzeug 8 bewegt, so dass sich der Abstand d nicht weiter ändert.

Figur 2a zeigt die Parklücke 2 als Parallelparklücke. Folglich stehen die Fahrzeuge 7 und 8 parallel zur Fahrbahn, auf der sich das Fahrzeug 1 der Parklücke 2 nähert. Zwischen dem Fahrzeug 1 und dem Fahrzeug 7 wird ein Abstand d gemessen. Durch die Erfassungsmittel 6a und 6b wird sowohl in einer ersten Abstandposition a als auch in einer zweiten Abstandsposition b ein Abstand gemessen, der unterschiedlich groß ausfällt. Befindet sich das Fahrzeug 1 in einer Position, in der das Erfassungsmittel 6b den Abstand d zur ersten Abstandsposition a misst, ist der Abstand d relativ klein. Wird das Fahrzeug weiter in Richtung zum Zwischenpunkt 4 bewegt, vergrößert sich der Abstand d zwischen dem Erfassungsmittel 6a und der zweiten Abstandsposition b am Fahrzeug 7 wieder. Damit kann eine Parallelparklücke erkannt werden, und das Fahrzeug 1 wird entlang dem zweiten Abschnitt 5b bis zur endgültigen Parkposition in die Parklücke 2 eingeparkt.

Die Figuren 3a und 3b zeigen in einem Diagramm den Verlauf des Abstandes d über dem Weg s, den das Fahrzeug über dem ersten Abschnitt 3 und dem zweiten Abschnitt 5a und 5b der Einparktrajektorie misst. Auf der Ordinate des Abstandes d ist sowohl die erste Abstandsposition a als auch die zweite Abstandsposition b zwischen den Erfassungsmitteln 6a und 6b und dem Fahrzeug 7 dargestellt. Figur 3a zeigt dabei den Verlauf des Abstandes d beim Einparken in eine Parallelparklücke, so dass der Abstand zunächst kleiner wird, wenn sich das Erfassungsmittel 6a und 6b der Fahrzeugecke nähert, die mit der ersten Abstandsposition a bezeichnet ist. Fährt das Fahrzeug weiter in die Parklücke ein, vergrößert sich der Abstand wieder, so dass der Abstand d in der zweiten Abstandsposition b größer ist als in der ersten Abstandsposition a.

Figur 3b zeigt den Abstand d über einer Diagonalparklücke, so dass sich der Abstand zwischen dem Erfassungsmittel 6a und 6b und dem Fahrzeug 7 nicht mehr ändert. Folglich ist der Abstand d in der ersten Abstandsposition a genauso groß wie in der zweiten Abstandsposition b.

## Patentansprüche

1. Verfahren zum unterstützten Einparken eines Fahrzeugs (1) in eine Parklücke (2) mit einer Parkassistenzvorrichtung, wobei die Parkassistenzvorrichtung das Fahrzeug (1) entlang wenigstens einer Einparktrajektorie führt, und wobei das Verfahren wenigstens die folgenden Schritte aufweist:
- Führen des Fahrzeugs (1) entlang eines ersten Abschnittes (3) der Einparktrajektorie bis zu einem Zwischenpunkt (4), wobei der Zwischenpunkt (4) derart bestimmt wird, dass ein nachfolgendes Einparken des Fahrzeugs (1) in die Parklücke (2) ermöglicht ist, die als Parallelparklücke oder die als Diagonalparklücke ausgeführt ist,
- nach Erreichen des Zwischenpunktes (4) Erkennen der Parklücke (2) als Parallelparklücke oder als Diagonalparklücke,
- Führen des Fahrzeugs (1) entlang eines auf den ersten Abschnitt (3) folgenden zweiten Abschnittes (5a, 5b) der Einparktrajektorie, der so gewählt wird, dass das Fahrzeug (1) in Abhängigkeit des Vorliegens einer Parallelparklücke oder einer Diagonalparklücke geführt wird, wobei das Fahrzeug (1) wenigstens ein Erfassungsmittel (6a, 6b) aufweist, mit dem die Erkennung der Parklücke als Parallelparklücke oder als Diagonalparklücke ausgeführt wird,
wobei durch das Erfassungsmittel (6a, 6b) über dem zweiten Abschnitt (5a) der Einparktrajektorie ein im Wesentlichen gleich bleibender Abstand (d) detektiert wird, wenn die Parklücke (2) als Diagonalparklücke ausgeführt ist, sodass der zweite Abschnitt (5a) im Wesentlichen als gerade Rückwärtsfahrt ausgeführt wird,
und wobei durch das Erfassungsmittel (6a, 6b) über dem zweiten Abschnitt (5b) der Einparktrajektorie ein größer werdender Abstand (d) detektiert wird, wenn die Parklücke (2) als Parallelparklücke ausgeführt ist, sodass der zweite Abschnitt (5b) im Wesentlichen als Bahnkurve ausgeführt wird.

2. Verfahren nach Anspruch 1, **dadurch gekennzeichnet, dass** die Parklücke (2) durch Objekte (7, 8) begrenzt ist, wobei die Erkennung der Parklücke (2) als Parallelparklücke oder als Diagonalparklücke durch eine Detektion wenigstens eines der Objekte (7, 8) mit dem Erfassungsmittel (6a, 6b) ausgeführt wird.

3. Verfahren nach Anspruch 2, **dadurch gekennzeichnet, dass** wenigstens eines der Objekte (7, 8) ein weiteres Fahrzeug (7, 8) ist, welches parallel zu einer Fahrbahn ausgerichtet ist, wenn die Parklücke (2) eine Parallelparklücke ist und welches diagonal zur Fahrbahn ausgerichtet ist, wenn die Parklücke (2) eine Diagonalparklücke ist.

4. Verfahren nach einem der Ansprüche 2 oder 3, **dadurch gekennzeichnet, dass** mit dem Erfassungsmittel (6a, 6b) ein Abstand (d) zwischen dem Fahrzeug (1) und wenigstens einem der Objekte (7, 8) bestimmt wird.

5. Verfahren nach einem der vorgenannten Ansprüche, **dadurch gekennzeichnet, dass** der erste Abschnitt (3) der Einparktrajektorie bis zum Zwischenpunkt (4) derart bestimmt wird, dass das Fahrzeug (1) eine Ausrichtung aufweist, in der das Fahrzeug (1) etwa parallel zu einem Fahrzeug (7, 8) angeordnet ist, wenn dieses Fahrzeug (7, 8) diagonal zu einer Fahrbahn ausgerichtet ist, auf der sich das Fahrzeug (1) der Parklücke (2) nähert.

6. Parkassistenzvorrichtung zum unterstützten Einparken eines Fahrzeugs (1) in eine Parklücke (2) entlang wenigstens einer Einparktrajektorie,
**dadurch gekennzeichnet, dass**
- die Einparktrajektorie in einen ersten Abschnitt (3) und in einen zweiten Abschnitt (5a, 5b) aufgeteilt ist und
- zwischen den Abschnitten (3, 5a, 5b) ein Zwischenpunkt (4) vorgesehen und eine Ausrichtung des Fahrzeugs (1) im Zwischenpunkt (4) derart bestimmt ist,
- dass ein nachfolgendes Einparken in eine als Parallelparklücke oder als Diagonalparklücke ausgeführte Parklücke (2) ermöglicht ist, wobei
- nach Erreichen des Zwischenpunktes (4) eine Erkennung der Parklücke (2) ermöglicht ist, derart, dass eine Erkennung der Parklücke (2) als Parallelparklücke oder als Diagonalparklücke erfolgt.

7. Parkassistenzvorrichtung nach Anspruch 6, **dadurch gekennzeichnet, dass** Erfassungsmittel (6a, 6b) vorgesehen sind, mittels denen die Erkennung der Parklücke als Parallelparklücke oder als Diagonalparklücke ermöglicht ist.

## Claims

1. Method for the assisted parking of a vehicle (1) in a parking space (2) using a parking assistance apparatus, wherein the parking assistance apparatus guides the vehicle (1) along at least one parking trajectory, and wherein the method comprises at least the following steps:
- guiding the vehicle (1) along a first portion (3) of the parking trajectory up to an intermediate point (4), wherein the intermediate point (4) is determined in such a way that the vehicle (1) can be subsequently parked in the parking space (2) which is designed as a parallel parking space or which is designed as a diagonal parking space,
- identifying the parking space (2) as a parallel parking space or as a diagonal parking space after the intermediate point (4) is reached,
- guiding the vehicle (1) along a second portion (5a, 5b) of the parking trajectory, which second portion follows the first portion (3) and is selected such that the vehicle (1) is guided as a function of the said parking space being a parallel parking space or a diagonal parking space, wherein the vehicle (1) has at least one detection means (6a, 6b) with which the parking space is identified as a parallel parking space or as a diagonal parking space,
wherein a substantially constant distance (d) is detected over the second portion (5a) of the parking trajectory by the detection means (6a, 6b) if the parking space (2) is designed as a diagonal parking space, with the result that the second portion (5a) is designed substantially as a straight reversing movement,
and wherein a distance (d) which becomes increasingly larger is detected over the second portion (5b) of the parking trajectory by the detection means (6a, 6b) if the parking space (2) is designed as a parallel parking space, with the result that the second portion (5b) is designed substantially as a curved path.

2. Method according to Claim 1, **characterized in that** the parking space (2) is bounded by objects (7, 8), wherein the parking space (2) is identified as a parallel parking space or as a diagonal parking space by at least one of the objects (7, 8) being detected by the detection means (6a, 6b).

3. Method according to Claim 2, **characterized in that** at least one of the objects (7, 8) is a further vehicle (7, 8) which is oriented parallel to a carriageway if the parking space (2) is a parallel parking space, and which is oriented diagonally to the carriageway if the parking space (2) is a diagonal parking space.

4. Method according to either of Claims 2 and 3, **characterized in that** a distance (d) between the vehicle (1) and at least one of the objects (7, 8) is determined using the detection means (6a, 6b).

5. Method according to one of the preceding claims, **characterized in that** the first portion (3) of the parking trajectory up to the intermediate point (4) is determined in such a way that the vehicle (1) has an orientation in which the vehicle (1) is arranged approximately parallel to a vehicle (7, 8) if this vehicle (7, 8) is oriented diagonally to a carriageway on which the vehicle (1) is approaching the parking space (2).

6. Parking assistance apparatus for the assisted parking of a vehicle (1) in a parking space (2) along at least one parking trajectory, **characterized in that**
- the parking trajectory is divided into a first portion (3) and into a second portion (5a, 5b), and
- an intermediate point (4) is provided between the portions (3, 5a, 5b) and an orientation of the vehicle (1) at the intermediate point (4) is determined in such a way
- that the said vehicle can be subsequently parked in a parking space (2) which is designed as a parallel parking space or as a diagonal parking space, wherein
- the parking space (2) can be identified in such a way that the parking space (2) is identified as a parallel parking space or as a diagonal parking space after the intermediate point (4) is reached.

7. Parking assistance apparatus according to Claim 6, **characterized in that** detection means (6a, 6b) are provided, it being possible for the parking space to be identified as a parallel parking space or as a diagonal parking space by means of the said detection means.

## Revendications

1. Procédé d'assistance de l'entrée en stationnement d'un véhicule (1) dans un emplacement de stationnement (2) avec un dispositif d'assistance au stationnement, le dispositif d'assistance au stationnement guidant le véhicule (1) le long d'au moins une trajectoire d'entrée en stationnement, et le procédé présentant au moins les étapes suivantes :
- guidage du véhicule (1) le long d'une première portion (3) de la trajectoire d'entrée en stationnement jusqu'à un point intermédiaire (4), le point intermédiaire (4) étant conçu de telle sorte qu'une entrée en stationnement du véhicule (1) dans l'emplacement de stationnement (2) est ensuite possible, lequel se présente sous la forme d'un emplacement de stationnement en parallèle ou d'un emplacement de stationnement en épi,
- après avoir atteint le point intermédiaire (4), identification de l'emplacement de stationnement (2) en tant qu'emplacement de stationnement en parallèle ou qu'emplacement de stationnement en épi,
- guidage du véhicule (1) le long d'une deuxième portion (5a, 5b) de la trajectoire d'entrée en stationnement qui suit la première portion (3), laquelle est choisie de telle sorte que le véhicule (1) est guidé en fonction de la présence d'un emplacement de stationnement en parallèle ou d'un emplacement de stationnement en épi, le véhicule (1) présentant au moins un moyen de détection (6a, 6b) avec lequel est réalisée l'identification de l'emplacement de stationnement en tant qu'emplacement de stationnement en parallèle ou qu'emplacement de stationnement en épi, un écart (d) qui reste sensiblement constant étant détecté par le moyen de détection (6a, 6b) sur la deuxième portion (5a) de la trajectoire d'entrée en stationnement lorsque l'emplacement de stationnement (2) est réalisé sous la forme d'un emplacement de stationnement en épi, de sorte que la deuxième portion (5a) est réalisée sensiblement sous la forme d'une marche arrière en ligne droite,
et un écart (d) qui s'agrandit étant détecté par le moyen de détection (6a, 6b) sur la deuxième portion (5b) de la trajectoire d'entrée en stationnement lorsque l'emplacement de stationnement (2) est réalisé sous la forme d'un emplacement de stationnement en parallèle, de sorte que la deuxième portion (5b) est réalisée sensiblement sous la forme d'une portion de trajectoire.

2. Procédé selon la revendication 1, **caractérisé en ce que** l'emplacement de stationnement (2) est délimité par des objets (7, 8), l'identification de l'emplacement de stationnement (2) en tant qu'emplacement de stationnement en parallèle ou qu'emplacement de stationnement en épi étant réalisée par une détection d'au moins l'un des objets (7, 8) avec le moyen de détection (6a, 6b).

3. Procédé selon la revendication 2, **caractérisé en ce qu'**au moins l'un des objets (7, 8) est un autre véhicule (7, 8) qui est orienté parallèlement à une voie de circulation lorsque l'emplacement de stationnement (2) est un emplacement de stationnement en parallèle et qui est orienté en épi par rapport à la voie de circulation lorsque l'emplacement de stationnement (2) est un emplacement de stationnement en épi.

4. Procédé selon l'une des revendications 2 ou 3, **caractérisé en ce qu'**un écart (d) entre le véhicule (1) et au moins l'un des objets (7, 8) est déterminé avec le moyen de détection (6a, 6b).

5. Procédé selon l'une des revendications précédentes, **caractérisé en ce que** la première portion (3) de la trajectoire d'entrée en stationnement jusqu'au point intermédiaire (4) est déterminée de telle sorte que le véhicule (1) présente une orientation dans laquelle le véhicule (1) est disposé approximativement parallèlement à un véhicule (7, 8) lorsque ce véhicule (7, 8) est orienté en épi par rapport à une voie de circulation sur laquelle le véhicule (1) se rapproche de l'emplacement de stationnement (2).

6. Dispositif d'assistance au stationnement pour l'entrée en stationnement assistée d'un véhicule (1) dans un emplacement de stationnement (2) le long d'au moins une trajectoire d'entrée en stationnement, **caractérisé en ce que**
- la trajectoire d'entrée en stationnement est divisée en une première portion (3) et en une deuxième portion (5a, 5b) et
- un point intermédiaire (4) est prévu entre les portions (3, 5a, 5b) et une orientation du véhicule (1) au point intermédiaire (4) est déterminée de telle sorte
- qu'une entrée en stationnement du véhicule (1) dans un emplacement de stationnement (2) qui se présente sous la forme d'un emplacement de stationnement en parallèle ou d'un emplacement de stationnement en épi est ensuite rendue possible,
- une identification de l'emplacement de stationnement (2) étant possible après avoir atteint le point intermédiaire (4), de telle sorte qu'une identification de l'emplacement de stationnement (2) en tant qu'emplacement de stationnement en parallèle ou qu'emplacement de stationnement en épi est effectuée.

7. Dispositif d'assistance au stationnement selon la revendication 6, **caractérisé en ce que** sont prévus des moyens de détection (6a, 6b) à l'aide desquels l'identification de l'emplacement de stationnement en tant qu'emplacement de stationnement en parallèle ou qu'emplacement de stationnement en épi est rendue possible.
